# EUROPEAN PATENT APPLICATION

(11) **EP 2 177 385 A2**
(43) Date of publication of application: **21.04.2010**
(21) Application number: 09154445.2
(22) Date of filing: 05.03.2009
(51) Int. Cl.: B60K 6/24, B60K 6/46, B60K 6/52, B60K 1/02, B60K 3/04

(54) **Turbine-based power-generating system for hybrid and electric automobiles, cars, transports, machinery and motorcycles**

(30) Priority: 15.10.2008 UY 31396
(71) Applicant: Corradini, Martin Eugenio, Buenos Aires (AR)
(72) Inventor: Corradini, Martin Eugenio, Buenos Aires (AR)
(74) Representative: Gulde Hengelhaupt Ziebig & Schneider

(57) **Abstract**

Power-generating system based on turbines (T) activated by gears (E,e), driving belts or chains, geared or connected -according to design and needs - to axles, semi-axles (se), transmission and differential (also applicable to the flywheel, wheels and gearbox gears). In electric engines only, the system is applicable to rotors, axles and bushings.
The rotational movement of the gears (E,e), driving belts or chains is transferred to the turbine (T), which converts it into energy. In the case of motorcycles, the system is activated by driving chains or belts, generating power from the rotational movement of the wheels (r) to the turbine (T).
The system is applicable to hybrid and electric vehicles.

## Description

### I.

The invention refers to a turbine-based power-generating system for hybrid and electricity-powered automobiles, cars, transports, machinery and motorcycles.

### II.

This system is applicable to any kind of hybrid or electricity-powered motorcycle, sidecar motorcycle, automobile, car or transport (trucks, pick-up trucks, locomotives, underground locomotives, trams, buses, minibuses, small vehicles, heavy machinery, agricultural machinery, common-use machines, war machinery, caterpillar vehicles, etc).

### III.

Current power-generating systems for hybrid or electric vehicles are characterized by the use of energy stored in batteries, which need recharging on a daily basis. Therefore, these systems are limited in terms of autonomy and performance.

The system of the invention does not need recharging since it generates power for both its overall functioning and batteries, thus providing unlimited autonomy to the vehicle.

Never before have power-generating turbines been used to convert the movement of axles, semi-axles, transmission and differential (also applicable to the flywheel, wheels and gearbox gears) into electric power for automobiles, cars, transports, machinery, and motorcycles. In electric engines only, the system is applicable to rotors, axles and bushings.

The system is absolutely innovating. It supplies the vehicle with constant power while it is in motion (the more the vehicle circulates, the more power the system generates).

Unlike the system used in existing electric-powered vehicles, this system requires no recharging from external power sources other than an initial charge needed to start the engine and travel a few meters. Then, the turbines will generate the power needed for both its functioning and the charging of the batteries.

No existing turbine, transformer, gear, or driving chain or belt design (corresponding to independent invention patent applications) is adequate to be used with this system. The implementation of the system will require the creation of new designs for these parts of the engine, as well as for the different elements of the chassis, suspension, turbine casing, axles, semi-axles, transmission, differential, etc.

### IV.

Turbine-based power-generating system activated by gears, driving chains or belts (conversion of mechanical energy into electrical energy) geared or connected - according to design and needs- to: axles, semi-axles, transmission and differential (also applicable to the flywheel, wheels and gearbox gears). In electric engines only, the system is applicable to rotors, axles and bushings.

In the case of motorcycles, the system is activated by driving chains or belts, generating power from the wheels (rear, front or both) to the turbine. In the case of sidecar motorcycles, the turbine is sitting on the sidecar axle.

The invention refers to a power-generating system based on turbines activated by gears, driving belts or chains, geared or connected -according to design and needs-to axles, semi-axles, transmission and differential (also applicable to the flywheel, wheels and gearbox gears). In electric engines only, the system is applicable to rotors, axles and bushings.

The rotational movement of the gears, driving belts or chains is transferred to the turbine, which converts it into energy. In the case of motorcycles, the system is activated by driving chains or belts, generating power from the rotational movement of the wheels to the turbine.

The system is applicable to hybrid and electric vehicles.

### V.

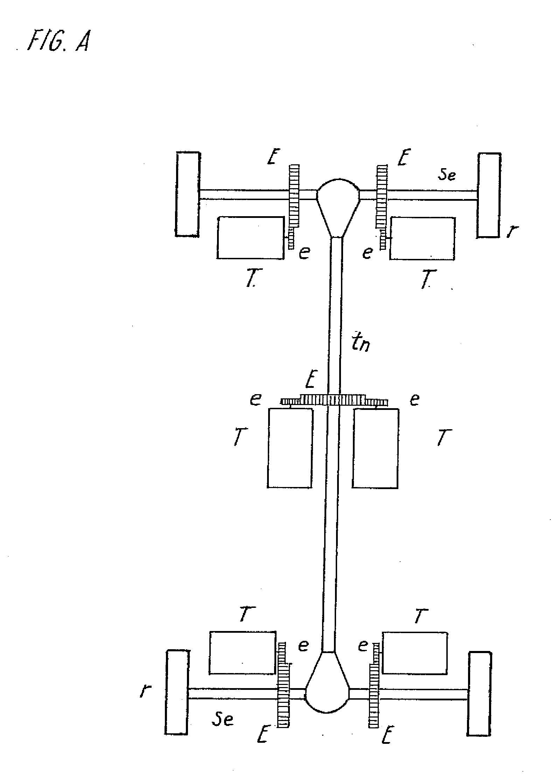

The drawing has been simplified for a better understanding of the system. Chassis, suspensions, steering, etc. have been omitted for a better display of key components of the system. Brief description of the figures of the drawing:
**Fig. A**. Superior view
   **t.** Turbine
   **e.** Main gear
   **e.** Turbine gear
   **se.** Semi-axles
   **tn.** Transmission
   **r.** Wheels

Given the multiple applications of the system, differential and wheels have been simplified for its better understanding. Corresponding to independent invention patent applications, the turbine design has also been simplified.

### VI.

Turbines are activated by gears, driving belts or chains, which are geared or connected -according to design and needs- to: axles, semi-axles, transmission and differential (also applicable to the flywheel, wheels and gearbox gears), converting mechanical energy into electrical energy. In electric engines only, the system is applicable to rotors, axles and bushings.

Requiring no refueling whatsoever, the system will allow for supplying the vehicle with unlimited power. The system produces no polluting emissions and it does not require any fuel.

The system is absolutely innovating. Never before has a turbine-based power-generating system been used. According to design and needs, turbines are activated by the rotational movement of axles, semi-axles, differential and transmission (in hybrid vehicles, also applicable to the flywheel, wheels and gearbox gears; in electric vehicles, also applicable to rotors, axles and bushings).

Turbines are activated by gears, driving belts or chains, which are geared or connected -according to design and needs- to: axles, semi-axles, transmission and differential (in hybrid vehicles, also applicable to the flywheel, wheels and gearbox gears; in electric vehicles, also applicable to rotors, axles and bushings).

No existing turbine, transformer or gear design (corresponding to independent invention patent applications) is adequate to be used with this system. The implementation of the system will require the creation of new designs for these parts of the engine, as well as for the different elements of the chassis, suspension, axles, semi-axles, differential, transmission, turbine housing, etc.

This system requires no recharging from external power sources other than an initial charge needed to start the engine and travel a few meters. Then, the turbines will generate the power needed for both its functioning and the charging of the batteries.

## Claims

1. A turbine-based power-generating system for hybrid and electric automobiles, cars, transports, machinery and motorcycles wherein the turbines or equivalent transformers or gear designs are activated by the rotational movement of axles, semi-axles, differential and transmission or by gears, driving belts or chains, which are geared or connected to the axles, semi-axles, transmission and differential.

2. A power-generating system as defined in claim 1, **characterized by** the conversion of the rotational movement of axles, semi-axles, transmission and differential into energy by means of generating turbines (in hybrid vehicles, also applicable to the flywheel, wheels and gearbox gears; in electric vehicles, also applicable to rotors, axles and bushings).

3. A power-generating system as defined in claim 1 or 2, **characterized by** the use of power-generating turbines.

4. A power-generating system as defined in any one of claims 1 to 3, **characterized by** the use of gears, driving belts or chains, which are connected to: axles, semi-axles, transmission and differential (in hybrid vehicles, also applicable to the flywheel, wheels and gearbox gears; in electric vehicles, also applicable to rotors, axles and bushings).

5. A power-generating system as defined in any one of claims 1 to 4, **characterized by** the implementation of one or several transmission axles (connecting the front axle with the rear one) in transports, cars and automobiles, aimed at obtaining greater rotational movement and power by allowance of a greater number of turbines.

6. A power-generating system as defined in any one of claims 1 to 5, **characterized by** allowance of multiple designs and turbine random distribution (perpendicular, parallel, superior, inferior, etc) as regards axles, semi-axles, transmission and differential (in hybrid vehicles, also applicable to also applicable to the flywheel, wheels and gearbox gears; in electric vehicles, also applicable to rotors, axles and bushings).

7. A power-generating system as defined in any one of claims 1 to 6, **characterized by** the implementation of connecting components between turbines and rotational elements.

8. Use of a power-generating system as defined in any one of claims 1 to 7, to caterpillar vehicles, machinery in general, and common-use machines (lawnmowers, etc).

9. Use of a power-generating system as defined in any one of claims 1 to 8 to amphibious vehicles.
